# EUROPEAN PATENT APPLICATION

(11) **EP 3 667 294 A1**
(43) Date of publication of application: **17.06.2020**
(21) Application number: 19194274.7
(22) Date of filing: 29.08.2019
(51) Int. Cl.: G01N 21/27, G01N 21/3504

(54) **OPTICAL ANALYSIS DEVICE, AND MACHINE LEARNING DEVICE USED FOR OPTICAL ANALYSIS DEVICE, AND METHOD FOR THE SAME**

(30) Priority: 14.12.2018 JP 2018234772
(71) Applicant: HORIBA, Ltd., Kyoto 601-8510 (JP)
(72) Inventor: ANDO, Yoshitake, Kyoto, 601-8510 (JP)
(74) Representative: Müller Hoffmann & Partner

(57) **Abstract**

The present invention refers to an optical analysis device 100 for performing output correction of a detector used for an optical analysis device by use of a plurality of light amounts and with simple configuration and for correcting nonlinearity of a light detector 4 which detects light to obtain an output value, and the optical analysis device 100 includes: a light source 1 which irradiates the light; a measurement cell 3 into which the light irradiated from the light source 1 is inputted; the light detector 4 which detects light outputted from the measurement cell to obtain the output value; a learning part 51b which uses the output value of the light detector 4 before the correction and an output value in a linear region of the light detector 4 or known concentration of a sample gas introduced to the measurement cell 3 to perform machine learning of a correction model for linearly correcting the output value of the light detector 4; and a saving part 51c which saves the correction model obtained by the learning part 51b.

## Description

### Technical Field

The present invention relates to an optical analysis device such as an FTIR, and a machine learning device used for the optical analysis device, and a method for the same.

### Background Art

A spectrometric analyzer such as an FTIR analyzes a sample component based on a spectrum of light which has passed through the sample. To detect an intensity of the light which has passed through the sample, a light detector such as an MCT light detector is used but it is needless to say that relationship (a calibration curve) between an output value of the light detector and an intensity of incident light needs to be obtained prior to the analysis.

Thus, it has conventionally been practiced that predetermined reference light is made incident on the light detector and an output value of the light detector at this point is acquired to create a calibration curve.

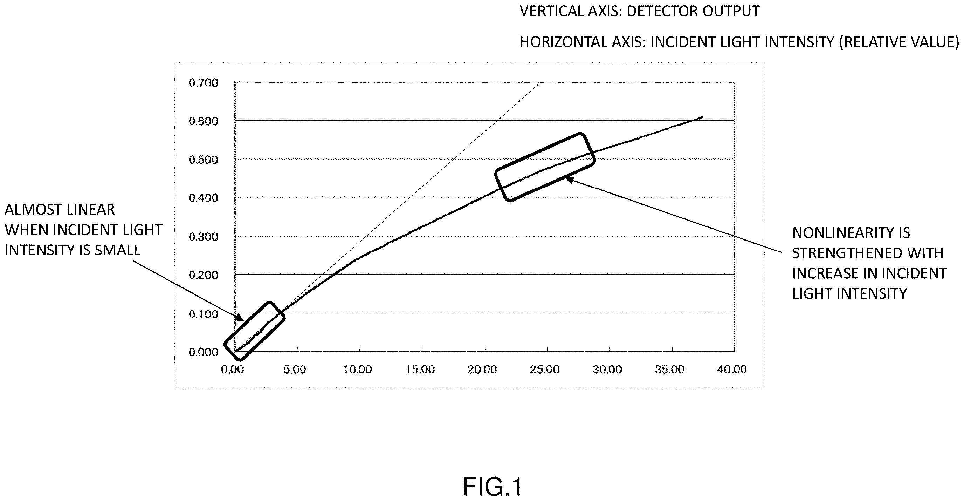

Referring to the MCT light detector as an example, the relationship between the output value and the incident light intensity is linear (proportional) where the incident light intensity is equal to or less than a predetermined value, as illustrated in FIG. 1. Therefore, the calibration curve can be created with relative ease in the aforementioned region since only offsets and a span needs to be obtained.

However, when the incident light intensity has become equal to or more than the predetermined value, the relationship is nonlinear as illustrated in the same figure, which requires preparation of a great deal of reference light with different intensities and measurement of respective output values to obtain an accurate calibration curve. More specifically, it takes approximately 10 minutes to measure one point and the measurement needs to be performed for a plurality of points (for example, 10 points or more), which therefore may require as many as several man-hours (time) for the creation of the calibration curve in some cases and also brings about a problem that some suitable facilities are required. Moreover, the problems with the man-hours and the facilities bring about a problem that it is difficult to check and recreate the calibration curve at a product delivery destination upon maintenance and repair. The same applies to not only the MCT light detector but also other types of light detectors.

### Citation List

### Patent Literature

[Patent Literature 1] Japanese Unexamined Patent Application Publication No. 2017-26506

### Summary of Invention

### Technical Problem

To solve such a problem, the applicant of the present invention considers a method as illustrated in Patent Literature 1 for, in both cases where an optical filter is provided on an optical path and where no optical filter is provided on the optical path, causing incidence of light emitted from a light source on a light detector, acquiring a first output value and a second output value as respective output values of the light detector for a plurality of beams with predetermined wavenumbers contained in the incident light, and obtaining an arithmetic expression (calibration curve) for calculating intensities of the incident light from the output values of the light detector where a ratio between the first output value and the second output value for each predetermined wave number and optical characteristics of the optical filter are provided as parameters.

However, the aforementioned output correction method is one-point correction using one optical filter, and thus upon a change in an amount of the light incident on the light detector, the intensity of the incident light is calculated from an arithmetic expression obtained by a light amount different from the aforementioned light amount, contributing to a measurement error. Note that it is possible to obtain an arithmetic expression for each of different light amounts by use of a plurality of optical filters with different characteristics, which complicates device configuration.

The present invention has been made to solve the problem described above, and it is a main object of the present invention to perform output correction of a light detector, which is used for an optical analysis device, by use of a plurality of light amounts and with simple configuration.

### Solution to Problem

Specifically, one aspect of the present invention refers to an optical analysis device for correcting nonlinearity of a light detector which detects light to obtain an output value, and the optical analysis device includes: a light source which irradiates the light; a measurement cell into which the light irradiated from the light source is inputted; the light detector which detects light outputted from the measurement cell to obtain the output value; a learning part which uses the output value of the light detector before the correction and an output value in a linear region of the light detector or known concentration of a sample introduced to the measurement cell to perform machine learning of a correction model for linearly correcting the output value of the light detector; and a saving part which saves the correction model obtained by the learning part.

With such configuration, the correction model for linearly correcting the output value of the light detector is learned by the mechanical learning algorithm, which therefore requires no conventional correction arithmetic algorithm and permits output correction of the light detector by use of a plurality of light amounts and with a simple configuration.

The optical analysis device, in a case where a change-causing part is included which changes an intensity of the light before the detection performed by the light detector, the learning part desirably learns the correction model for linearly correcting the output value of the light detector based on a variation component provided by the change-causing part and included in the output value of the light detector before the correction and based on the output value in the linear region of the light detector.

The optical analysis device, in a case where a temperature adjustment part is further included which performs a temperature adjustment of the measurement cell to a plurality of temperatures, the light outputted from the measurement cell contains: light which has been generated from the measurement cell already subjected to the temperature adjustment and whose light amount varies depending on the temperature of the measurement cell; and light which has been irradiated from the light source and which has passed through the measurement cell. In this case, the learning part desirably learns the correction model by use of a plurality of output values before the correction detected by the light detector upon respective temperature adjustments of the measurement cell to the plurality of temperatures.

With this configuration, not one-point correction, as is the case with a conventional practice, but multiple-point correction is performed, which permits creation of a robust correction model.

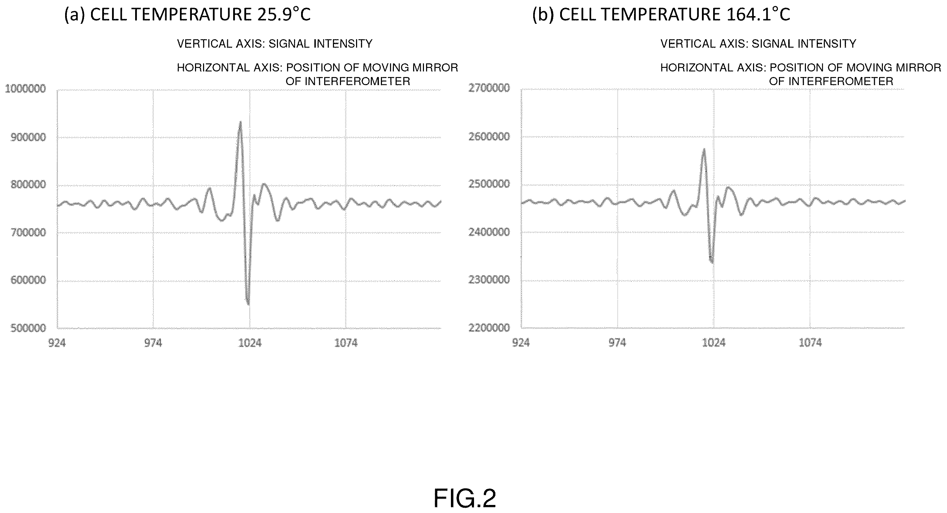

Infrared radiation of the measurement cell varies following a temperature change thereof, thereby changing an amount of light incident on the light detector. FIG. 2 illustrates output values provided from the light detector in a case where a temperature of the measurement cell is 25.9°C and in a case where the aforementioned temperature is 164.1 °C. Note that the output value is obtained by configuration such that an interferometer or a light modulator such as an optical chopper or a spectrometer which modulates incident light intensity is provided between the light source and the measurement cell, and FIG. 2 illustrates how the output value of the light detector varies in accordance with a position of a moving mirror of the interferometer. The same samples are used in the measurement cell at the both temperatures under same conditions other than the temperatures. As can be seen from FIG. 2, a DC offset component (DC component) depending on the infrared radiation from the measurement cell differs in output of the light detector between the case where the measurement cell is at 25.9°C and the case where the measurement cell is at 164.1°C. On the other hand, in a case where an output characteristic of the light detector is linear, a variation component provided by the interferometer (non-DC component) needs to be equal at either temperature, but an amplitude of the non-DC component is smaller at 164.1 °C in actual practice, which is attributable to a fact that the output characteristic of the light detector is nonlinear.

To improve robustness of the correction model, the learning part further desirably learns the correction model by acquiring at least one of: the output value of the light detector when an intensity of the light is set at zero; an offset component which has been provided by infrared irradiation of the measurement cell and which is included in the output value of the light detector; and the temperature of the measurement cell.

As a detailed embodiment of the change-causing part, it is possible that the change-causing part is provided between the light source and the measurement cell and is either of: an interferometer including a fixed mirror for reflecting the light irradiated from the light source and a moving mirror for reflecting the light irradiated from the light source while making reciprocal movement; and a light modulator for passing or blocking the light to modulate the intensity of the light.

The change-causing part may be configured to change concentration of the sample introduced to the measurement cell and change an intensity of the light before the detection performed by the light detector.

More specifically, the learning part learns the correction model by use of a reinforcement learning algorism and desirably includes: a reinforcement learning part which calculates the correction model for linearly correcting the output value of the light detector before the correction as a result of inputting of the output value before the correction; and a model evaluation part which evaluates the correction model by use of the output value in the linear region of the light detector or the known concentration of the sample introduced to the measurement cell, wherein the reinforcement learning part updates the correction model by use of a reward based on a result of the evaluation performed by the model evaluation part.

The model evaluation part desirably performs the evaluation by use of at least one of: a degree of agreement in time component; a degree of agreement in frequency component; and a degree of agreement in spectral characteristic between the output value after correction performed by use of the correction model and the output value in the linear region.

The learning part may use, in addition to the reinforcement learning algorithm, a supervised learning algorithm. In this case, the learning part desirably learns the correction model by use of the output value in the linear region of the light detector or the known concentration of the sample as supervised data.

Another aspect of the present invention refers to a machine learning device used for an optical analysis device for correcting nonlinearity of a light detector which detects light to obtain an output value, and the machine learning device includes: a learning part which uses the output value of the light detector before the correction and an output value in a linear region of the light detector or known concentration of a sample introduced to the optical analysis device to learn a correction model for linearly correcting the output value of the light detector; and a saving part which saves the correction model obtained by the learning part.

Still another aspect of the present invention refers to a machine learning method used for an optical analysis device including a light detector for correcting nonlinearity of a light detector which detects light to obtain an output value, the machine learning method includes learning a correction model for linearly correcting the output value of the light detector by use of the output value of the light detector before the correction and an output value in a linear region of the light detector or known concentration of a sample introduced to a measurement cell.

Still another aspect of the present invention refers to an optical analysis device for correcting nonlinearity of a light detector which detects light to obtain an output value, and the optical analysis device includes: a correction part which linearly corrects the output value of the light detector by use of the correction model generated by the learning part; and a arithmetic part which calculates concentration of a measurement target component by use of the output value after the correction performed by the correction part.

### Advantageous Effects of Invention

With the present invention configured as described above, output correction of a detector used for an optical analysis device can be performed by use of a plurality of light amounts and with simple configuration.

### Brief Description of Drawings

FIG. 1 is a characteristic diagram illustrating relationship between an intensity of incident light and an output value of an MCT light detector;
FIG. 2 is a diagram illustrating output values of the MCT light detector at cell temperatures of 25.9 °C and 164.1°C;
FIG. 3 is a schematic diagram illustrating an entire optical analysis device according to one embodiment of the present invention;

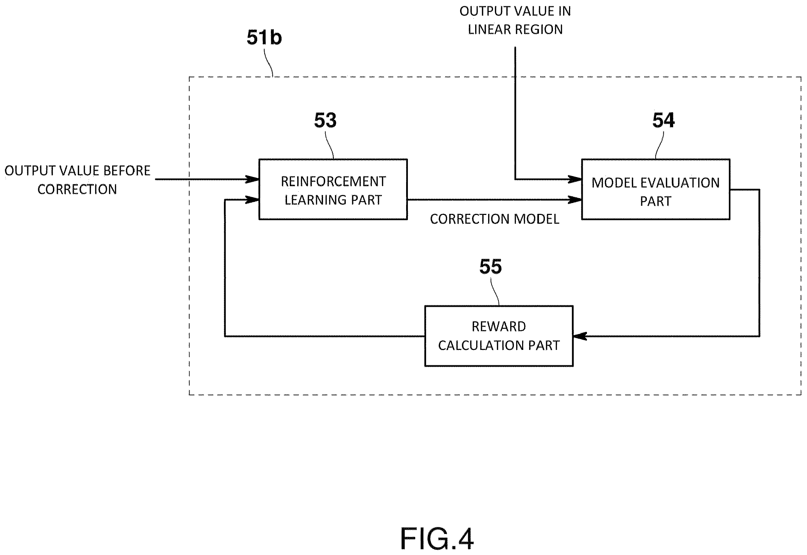

FIG. 4 is a functional block diagram illustrating a learning part of the same embodiment; and
FIG. 5 is a diagram illustrating one example of a machine learning method of a modified embodiment.

### Description of Embodiments

Hereinafter, one embodiment of an optical analysis device according to the present invention will be described with reference to the drawings.

### (Equipment Architecture)

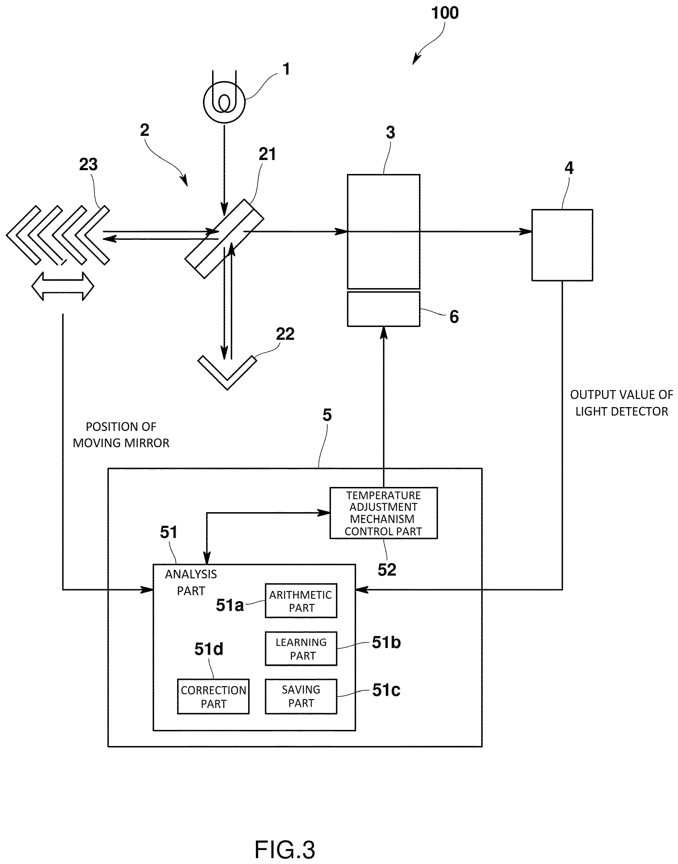

An optical analysis device 100 of the present embodiment is a Fourier transform infrared spectrometric analyzer referred to as a so-called FTIR and includes: a light source 1, an interferometer 2, a measurement cell 3, a light detector 4, and an arithmetic processing unit 5, as illustrated in FIG. 3.

The light source 1 emits light having a broad spectrum (continuous light containing light with a large number of wavenumbers) and, for example, a tungsten- iodine lamp or a high luminance ceramic light source is used as the light source 1.

The interferometer 2 is a change-causing part which changes an intensity of light before detection performed by the light detector 4, and uses a so-called Michelson interferometer including a single half mirror (beam splitter) 21, a fixed mirror 22, and a moving mirror 23, as illustrated in FIG. 3. Light incident on the interferometer 2 from the light source 1 is divided into reflected light and transmitted light by the half mirror 21. One of the light is reflected on the fixed mirror 22 while the other is reflected on the moving mirror 23, returning again to the half mirror 21 to be synthesized and exit from the interferometer 2.

Gas to be measured (hereinafter referred to as sample gas) is introduced to the measurement cell 3, so that the light exiting from the interferometer 2 is transmitted through the sample gas in the measurement cell 3 and guided to the light detector 4. The measurement cell 3 includes: a cell body formed into a cylindrical shape of metal such as aluminum; and a window material formed of a translucent material such as quartz glass provided at both end walls of the cell body.

The light detector 4 detects the light outputted from the measurement cell 3 and is configured such that an intensity of the incident light becomes linear with an output value of the light detector 4 in a predetermined range and becomes nonlinear therewith in other ranges. Here, the light detector 4 is the one which is referred to as an MCT light detector.

The arithmetic processing unit 5 has: an analog electrical circuit having a buffer, an amplifier, etc.; a digital electrical circuit having a CPU, a memory, a DSP, etc.; an A/D converter located between the analog electrical circuit and the digital electrical circuit; and so on. Through cooperation of the CPU and its surrounding devices in accordance with a predetermined program stored into the memory, the arithmetic processing unit 5 calculates a spectrum of the light transmitted through the sample gas based on the output value of the light detector 4 and also functions as an analysis part 51 which obtains light absorbance of each wavenumber from the light spectrum to analyze the sample gas.

The analysis part 51 calculates the light spectrum in a following manner.

Observing an intensity of the light transmitted through the sample gas with a position of the moving mirror 23 plotted at a horizontal axis while the moving mirror 23 is advanced and retreated, the light intensity draws a sine curve due to interference in case of light with a single wavenumber. On the other hand, the actual light transmitted through the sample gas has many wavenumbers. Since the aforementioned sine curve varies from one wavenumber to another, the actual light intensity is obtained by overlapping of the sine curves drawn by the respective wavenumbers and an interference pattern (interferogram) results in a wave packet form.

The analysis part 51 obtains a position of the moving mirror 23 by a range finder (not illustrated) such as an HeNe laser (not illustrated) and also obtains a light intensity at each position of the moving mirror 23 by the light detector 4, and subjects an interference pattern obtained through the above to fast Fourier transformation (FFT), whereby transformation into a light spectrum is performed where each frequency component is plotted at a horizontal axis and a light intensity signal is plotted at a vertical axis.

At this point, the intensity of the light transmitted through the sample gas, that is, the intensity of the light incident on the light detector 4 is calculated based on the output value of the light detector 4. To this end, however, relationship (a calibration curve) between the output value of the light detector 4 and the intensity of the incident light needs to be previously obtained and memorized into the memory. Note that the calibration curve in the present embodiment is an arithmetic expression for transforming the output value of the light detector 4 into the incident light intensity and may be provided by a table or a map.

The present embodiment provides a configuration such that the measurement cell 3 can be subjected to multi-stage temperature adjustment. The optical analysis device 100 has: a temperature adjustment mechanism 6 for performing temperature adjustment of the measurement cell 3; and a temperature adjustment mechanism control part 52 which controls the temperature adjustment mechanism 6. A temperature adjustment part is formed by the temperature adjustment mechanism 6 and the temperature adjustment mechanism control part 52.

The temperature adjustment mechanism 6 is a heater such as a heating wire provided around the measurement cell 3. The temperature adjustment mechanism control part 52 controls a power supply circuit which supplies a power to the temperature adjustment mechanism 6, thereby controlling a heating temperature of the measurement cell 3 heated by the temperature adjustment mechanism 6. For example, the temperature adjustment mechanism control part 52 controls to turn the temperature of the measurement cell 3 to 25.9 °C (at a low temperature) and 164.1°C (at a high temperature).

### (Machine Learning Function)

However, the arithmetic processing unit 5 of the present embodiment has a function of performing machine learning of a correction model for linearly correcting the output value of the light detector 4. More specifically, the arithmetic processing unit 5 has a function of performing, upon measurement of same samples, machine learning of the correction model for correcting in a manner such as to provide equal variation components (AC components) provided by the interferometer 2 regardless of a size of a DC offset component (DC component) in the interferogram.

More specifically, as illustrated in FIG. 3, the analysis part 51 of the arithmetic processing unit 5 has: in addition to an arithmetic part 51a which calculates concentration of a measurement target component, a learning part 51b which learns the correction model for linearly correcting the output value of the light detector 4; a saving part 51c which saves the correction model obtained by the learning part 51b; and a correction part 51d which linearly corrects the output value of the light detector 4 by use of the correction model.

The learning part 51b performs machine learning of the correction model by use of a reinforcement learning algorithm. The learning part 51b includes: a reinforcement learning part 53 which receives the output value (for example, interferogram) of the light detector 4 before the correction and then performs arithmetic operation the correction model for linearly correcting the output value before the correction; a model evaluation part 54 which evaluates the correction model by use of the output value in a linear region of the light detector 4; and a reward calculation part 55 which calculates a predefined reward in accordance with a result of the evaluation performed by the model evaluation part 54.

The reinforcement learning part 53 learns the correction model by obtaining output values respectively obtained when the measurement cell 3 is turned to a plurality of temperatures

The reinforcement learning part 53 also updates the correction model by use of the reward obtained by the reward calculation part 55 based on the result of the evaluation performed by the model evaluation part 54. Updating the correction model here includes changing various parameters included in the correction model.

The model evaluation part 54 performs the evaluation based on at least one of: a degree of agreement in time component; a degree of agreement in frequency component; and a degree of agreement in spectral characteristic, all between "the output value after the correction performed by use of the correction model" and "the output value in the linear region of the light detector 4". The degree of agreement in time component is a degree of agreement in graph waveform where, for example, time is plotted at a horizontal axis and the light intensity signal is plotted at a vertical axis. The degree of agreement in frequency component is obtained by using a frequency component obtained by subjecting the light intensity signal to Fourier transformation and is a degree of agreement in graph waveform where, for example, a wavenumber component is plotted at a horizontal axis and the light intensity signal is plotted at a vertical axis. The degree of agreement in spectral characteristic is a degree of agreement in graph waveform where, for example, a wavelength component is plotted at a horizontal axis and the light intensity signal is plotted at a vertical axis.

Note that the output values which may be used as the output value in the linear region of the light detector 4 include: an output value in a predetermined region in which relationship between the incident light intensity and the output value becomes linear since the incident light intensity from the light source 1 is weak; and an output value such that relationship between the incident light intensity and the output value becomes linear when a filter (not illustrated) is installed between the light source 1 and the measurement cell 3 and the 1intensity of the light incident from the light source 1 is attenuated.

The reward calculation part 55 calculates the reward in accordance with the degree of agreement between "the output value after the correction performed by use of the correction model" and "the output value in the linear region of the light detector 4", which has been obtained by the model evaluation part 54. Here, the reward in accordance with the degree of agreement is previously memorized.

### (One Example of Reinforcement Learning Method)

Next, one example of a method for calculating the correction model in the reinforcement learning will be described.

In case of the optical analysis device 100 having the interferometer 2 as the change-causing part as is the case with the FTIR of the present embodiment, the measurement cell 3 is irradiated with light of the light source 1 through the interferometer 2. Consequently, the output value (interferogram) of the light detector 4 contains both a DC component and an AC component.

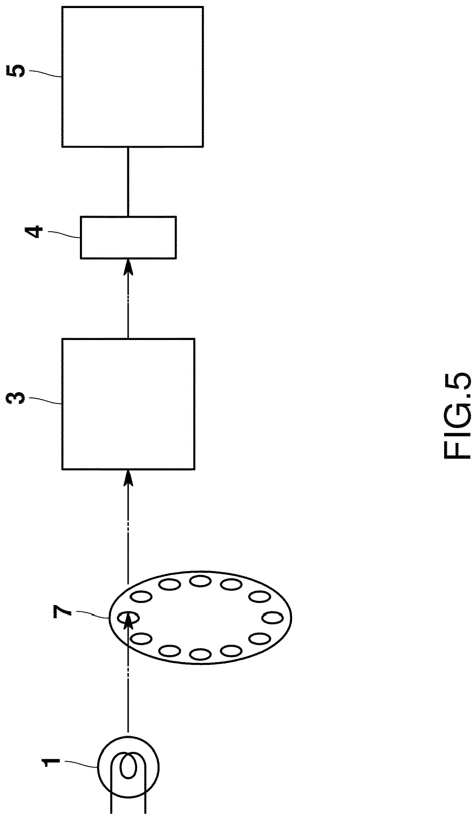

On the other hand, in case of an analysis device such as an non-dispersive infrared spectrometric analyzer (NDIR) having no interferometer 2, as illustrated in FIG. 5, a light modulator 7 such as an optical chopper as a change-causing part is arranged between the light source 1 and the measurement cell 3, so that presence of the light modulator 7 provides configuration such that the output value (interferogram) of the light detector 4 contains both the DC component and the AC component. A plurality of light through holes formed at the light modulator 7 here may be configured to have mutually different opening diameters and have different amounts of passing light depending on the light through holes. Note that in any of the cases above, the sample gas or reference gas may be sealed into the measurement cell 3 or may not be sealed therein.

In the aforementioned state, the temperature adjustment mechanism control part 52 performs control so that a temperature of the temperature adjustment mechanism 6 turns, for example, from 25.9 °C (at a low temperature) to 164.1 °C (at a high temperature). The light detector 4 outputs an output value at each temperature in the aforementioned range. Changing the temperature of the measurement cell 3 as described above changes a magnitude of the DC component contained in the output value of the light detector 4.

The output value before the correction at each temperature (the DC component varies depending on infrared radiation from the measurement cell 3) is inputted to the reinforcement learning part 53. As a result of the aforementioned inputting, the reinforcement learning part 53 calculates a correction model, the model evaluation part 54 evaluates the correction model, and the reward calculation part 55 calculates a reward. Then the reinforcement learning part 53 updates the correction model in a manner such as to maximize the reward of the reward calculation part 55.

The correction model obtained through the above process is saved into the saving part 51c. Then the correction part 51d uses the correction model saved in the saving part 51c to perform linear correction of the output value of the light detector 4 before the correction. The output value subjected to the linear correction is inputted to the arithmetic part 51a, which calculates concentration of the measurement target component by use of the output value subjected to the linear correction.

### (Effects of Present Embodiment)

With the present embodiment configured as described above, the correction model for linearly correcting the output value of the light detector 4 is learned by the machine learning algorithm, which therefore no longer requires a conventional correction formula operation algorithm and permits output correction of the light detector 4 by use of a plurality of light amounts and with simple configuration.

### (Other Modified Embodiment)

Note that the present invention is not limited to the embodiment described above.

For example, as a signal inputted to the reinforcement learning part 53, in addition to the output value of the light detector 4 before the correction, at least one of the output value of the light detector 4 when the incident light intensity is zero (an amount of light incident on the light detector is zero), a value of a DC offset component separated from the output value (interferogram) of the light detector 4, and the temperature of the measurement cell 3 may be used. In this case, the reinforcement learning part 53 learns the correction model by use of the aforementioned values together with the output value of the light detector 4 before the correction.

The model evaluation part 54 may, in addition to using the output value in the linear region of the light detector 4, use known concentration of the sample, which is provided for correction model evaluation, to thereby evaluate the correction model. For example, the correction model may be evaluated through comparison between calculated concentration obtained by the output value after correction performed by use of the correction model and correct concentration (known concentration) for the evaluation.

The embodiment described above has configuration such that the optical analysis device 100 has a machine learning function. Alternatively, a machine learning device may be provided separately from the optical analysis device 100 and the machine learning device may perform reinforcement learning of the correction model and the correction model may be memorized into the optical analysis device 100. In this case, the machine learning device is provided with the learning part 51b and the saving part 51c. On the other hand, the optical analysis device 100 is provided with the saving part 51c and the correction part 51d.

In the embodiment described above, the interferometer 2 or the light modulator 7 such as the optical chopper is used as the change-causing part forming the AC component in the output value of the light detector. Alternatively, without using the interferometer 2 or the light modulator 7, a change-causing part may be used which varies concentration of the sample introduced to the measurement cell 3 to change an intensity of the light before the detection performed by the light detector 4, thereby forming the AC component in the output value of the light detector 4.

The learning part 51b of the embodiment described above performs the machine learning through the reinforcement learning algorithm but may perform the machine learning through a supervised learning algorithm.

In this case, the learning part 51b learns the correction model by using, as teacher data (a learning data set), the output value in the linear region of the light detector 4 or the known concentration of the sample introduced to the measurement cell 3. More specifically, the data set is inputted as the teacher data which includes: the output value before the correction; at least either one of a time component, a frequency component and a spectral characteristic of the output value in the linear region of the light detector 4 . The learning part 51b learns the correction model through the data set.

The light detector 4 is not limited to the MCT light detector. The present invention is applicable to a light detector configured such that the incident light intensity becomes linear with the output value thereof in a predetermined range and becomes non-linear in other ranges.

Moreover, the present invention is not limited to the Fourier transformation infrared spectrometric analyzer and may also be applied to another type of a spectrometric analyzer or a spectrometer (the one which is configured to even obtain a light spectrum in the embodiment described above) to provide the same effects.

The present invention is not limited to the embodiments described above, but various modifications can be made to the present invention within a range not departing from the spirits of the present invention.

### Reference Signs List

100 Optical analysis device
1 Light source
3 Measurement cell
4 Light detector
5 Arithmetic processing unit
51 Analysis part
52 Temperature adjustment mechanism control part (temperature adjustment part)
51a Arithmetic part
51b Learning part
51c Saving part
51d Correction part
6 Temperature control mechanism (temperature control part)

## Claims

1. An optical analysis device for correcting nonlinearity of a light detector which detects light to obtain an output value, the optical analysis device comprising:
a light source which irradiates the light;
a measurement cell into which the light irradiated from the light source is inputted;
the light detector which detects light outputted from the measurement cell to obtain the output value;
a learning part which uses the output value of the light detector before the correction and an output value in a linear region of the light detector or known concentration of a sample introduced to the measurement cell to perform machine learning of a correction model for linearly correcting the output value of the light detector; and
a saving part which saves the correction model obtained by the learning part.

2. The optical analysis device according to claim 1, further comprising
a change-causing part which changes an intensity of the light before the detection performed by the light detector, wherein
the learning part learns the correction model for linearly correcting the output value of the light detector based on a variation component provided by the change-causing part and included in the output value of the light detector before the correction and based on the output value in the linear region of the light detector.

3. The optical analysis device according to claim 1 or 2, further comprising
a temperature adjustment part performing a temperature adjustment of the measurement cell to a plurality of temperatures, wherein
the light outputted from the measurement cell contains: light which has been generated from the measurement cell already subjected to the temperature adjustment and whose light amount varies depending on the temperature of the measurement cell; and light which has been irradiated from the light source and which has passed through the measurement cell, and
the learning part learns the correction model by use of a plurality of output values before the correction detected by the light detector upon respective temperature adjustments of the measurement cell to the plurality of temperatures.

4. The optical analysis device according to any one of claims 1 to 3, wherein
the learning part further learns the correction model by acquiring at least one of: the output value of the light detector when an intensity of the light is set at zero; an offset component which has been provided by infrared irradiation of the measurement cell and which is included in the output value of the light detector; and the temperature of the measurement cell.

5. The optical analysis device according to any one of claims 2 to 4, wherein
the change-causing part is provided between the light source and the measurement cell and is either of: an interferometer including a fixed mirror for reflecting the light irradiated from the light source and a moving mirror for reflecting the light irradiated from the light source while making reciprocal movement; and a light modulator for passing or blocking the light to modulate the intensity of the light.

6. The optical analysis device according to any one of claims 1 to 5, wherein
the learning part includes:
a reinforcement learning part which performs arithmetic operation the correction model for linearly correcting the output value of the light detector before the correction as a result of inputting of the output value before the correction; and
a model evaluation part which evaluates the correction model by use of the output value in the linear region of the light detector or the known concentration of the sample introduced to the measurement cell, wherein
the reinforcement learning part updates the correction model by use of a reward based on a result of the evaluation performed by the model evaluation part.

7. The optical analysis device according to claim 6, wherein
the model evaluation part performs the evaluation by use of at least one of: a degree of agreement in time component; a degree of agreement in frequency component; and a degree of agreement in spectral characteristic, between the output value after correction performed by use of the correction model and the output value in the linear region.

8. The optical analysis device according to any one of claims 1 to 7, further comprising:
an interferometer which modulates the light from the light source into an interferogram; and
an arithmetic part which subjects the output value of the light detector to Fourier transformation and calculates concentration of a measurement target component based on a spectrum obtained through the Fourier transformation, wherein
Fourier transformation spectrometric analysis is performed.

9. A machine learning device used for an optical analysis device for correcting nonlinearity of a light detector which detects light to obtain an output value, the machine learning device comprising:
a learning part which uses the output value of the light detector before the correction and an output value in a linear region of the light detector or known concentration of a sample introduced to the optical analysis device to learn a correction model for linearly correcting the output value of the light detector; and
a saving part which saves the correction model obtained by the learning part.

10. A machine learning method used for an optical analysis device including a light detector for correcting nonlinearity of a light detector which detects light to obtain an output value, the machine learning method includes
learning a correction model for linearly correcting the output value of the light detector by use of the output value of the light detector before the correction and an output value in a linear region of the light detector or known concentration of a sample introduced to a measurement cell.

11. An optical analysis device for correcting nonlinearity of a light detector which detects light to obtain an output value, the optical analysis device comprising:
a correction part which linearly corrects the output value of the light detector by use of the correction model generated by the learning part according to any one of claims 1 to 9; and
an arithmetic part which calculates concentration of a measurement target component by use of the output value after the correction performed by the correction part.
